# EUROPEAN PATENT APPLICATION

(11) **EP 1 647 931 A1**
(43) Date of publication of application: **19.04.2006**
(21) Application number: 05255295.7
(22) Date of filing: 30.08.2005
(51) Int. Cl.: G06Q 10/00

(54) **Database device and methods for managing and manipulating electronics titles**

(30) Priority: 27.08.2004 US 604680 P
(71) Applicant: New York Board of Trade, New York NY 10282 (US)
(72) Inventor: Yeung, Nancy, Centrepoint NY 11721 (US); Fisheer, Paul J., New York NY 10282 (US)
(74) Representative: Exell, Jonathan Mark

(57) **Abstract**

Presented is a distributed computer network system and method for generating electronic title for commodities during international transit. The system populates data fields of a database with information from a shipper's letter of instruction concerning the commodity and identifying the title holder and the beneficial party. The data fields are transformed to create an electronic ocean bill of lading that associates title with a title holder identified therein. Encumbrance information from the titleholder and a third party, received through the network, is analyzed by a computer for any discrepancy. The computer authorizes an encumbrance on the title free of any paper documentation verifying the encumbrance, and updates the electronic ocean bill of lading to reflect the encumbrance. The electronic ocean bill of lading created by the computer is the sole determinant of the title to commodity, permitting the title holder to receive remuneration from the third party for the encumbrance.

## Description

### Claim of Priority

This application claims the benefit of priority, under 35 U.S.C. § 119(e), of U.S. Provisional Application No. 60/604,860, filed August 27, 2004, and titled "Database Device And Methods For Managing And Manipulating Electronic Titles," which is hereby incorporated by reference in its entirety.

### Field of Invention

This invention relates generally to a system and method for international commodity management, and more particularly to a database device driven system and method for coordinating electronic ownership title for a unit of commodity while it is in international transit.

### Background of the Invention

Each time an entity either imports or exports a commodity, the entity generates a paper trail associated with the movement and proposed movement of commodity. The amount of documentation associated with a commodity in the international market can be staggering. A study conducted by the World Trade Organization concludes that the global cost of shipping documentation alone costs four hundred twenty billion dollars in 1996, or seven percent of the cost of international trade, for 1996. The voluminous documentation associated with an international commodity exchange market can be demonstrated using coffee as an example.

The United States imports about twenty million bags of coffee per year. If the average size coffee transaction involves five hundred bags, and the coffee exchanges ownership only once before it reaches an onshore destination, then there would be 40,000 coffee transactions per year. If the coffee is exchanged twice, there would be 80,000 transactions per year, just while the commodity is in international transit. Presently, coffee is exchanged an average of 1.5 times, extrapolating to 60,000 transactions per year in the United States alone based on these assumptions.

With worldwide coffee imports at close to eighty million bags, the international market is four times larger than the U.S. segment. If coffee were exchanged at the same rate internationally as in the U.S., then the worldwide volume for ownership exchange during international transit would be 240,000 transactions per year. The annual cost of paper documentation for ownership exchange of U.S. bound coffee amounts to tens of millions of dollars, and the annual cost of paper documentation for the international ownership exchange rises to the hundreds of millions.

Accordingly, there is a need for a database device driven commodity documentation system which minimizes the physical paper trail associated with the international tracking of ownership exchanges for a particular commodity without compromising the integrity of the information associated with the particular commodity in that market. The establishment of an electronic ownership title and transfer of title electronically reduces the paper volume and transaction time. In addition, there is a need for a commodity documentation system which minimizes costs and time associated with the upkeep of such commodity records. Further, there is a need for a commodity documentation system which securely tracks the transfer of a commodity between all the actors involved in a series of transactions from the commodity shipper to the onshore recipient. The present invention can satisfy one or more of these and other needs.

### Summary of the Invention

In accordance with one aspect of the invention, a computer-implemented method for generating electronic title for commodities during international transit is operative on a computer comprising a database and connected to a distributed computer network. The method according to this aspect comprises programmatically executed steps under the control of at least one computer of building at least one data record in a database, and partitioning the data record into a plurality of data fields. One or more fields of the database are populated with information from a shipper's letter of instruction document concerning movement of the particular unit of the commodity and identifying the title holder and the beneficial party. The data fields are transformed to create an electronic ocean bill of lading, wherein the electronic ocean bill of lading associates title with a title holder identified therein. Encumbrance information from the title holder and a third party is received through the computer network. The encumbrance information is analyzed by the system for any discrepancy using a computer connected to the computer network. Then an encumbrance on the title is authorized through the computer network and indicated on the electronic ocean bill of lading, free of any paper documentation verifying the encumbrance. The electronic ocean bill of lading is updated to reflect the encumbrance. Thus, the electronic ocean bill of lading created by the computer is the sole determinant of the title to the particular unit of commodity, permitting the title holder to receive remuneration from the third party for the encumbrance.

In another aspect of the invention, an electronic delivery order which identifies a land carrier supplants the ocean bill of lading as an electronic title document, upon offloading the commodity from the vessel and delivery to the beneficial owner.

In accordance with another aspect of the invention, the method optionally comprises the steps of populating other data fields in the database with a plurality of electronic documents associated with the proposed movement of a particular unit of the commodity, and providing an access system which grants users access to data records and data fields according the to a set of permissions. The method can further comprise displaying a GUI data entry form associated with a data field on a terminal connected to the network, verifying that the set of permissions grants a user access to that data field, and uploading any edited data from the user to the database.

These and other aspects, features, steps and advantages can be further appreciated from the accompanying drawing Figures and description of certain illustrative embodiments.

### Brief Description of the Drawing Figures

Figure 1 is a flow diagram illustrating steps for an embodiment of commodity importation;

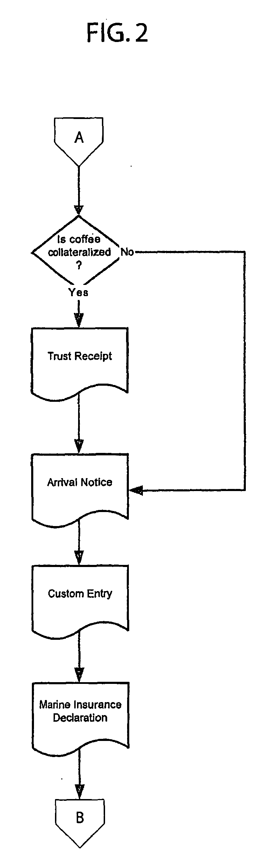

Figure 2 is a flow diagram illustrating steps for commodity arrival in accordance with the embodiment of Figure 1;
Figure 3 is a flow diagram illustrating steps for commodity transfer from pier to processor in accordance with the embodiment of Figure 1;

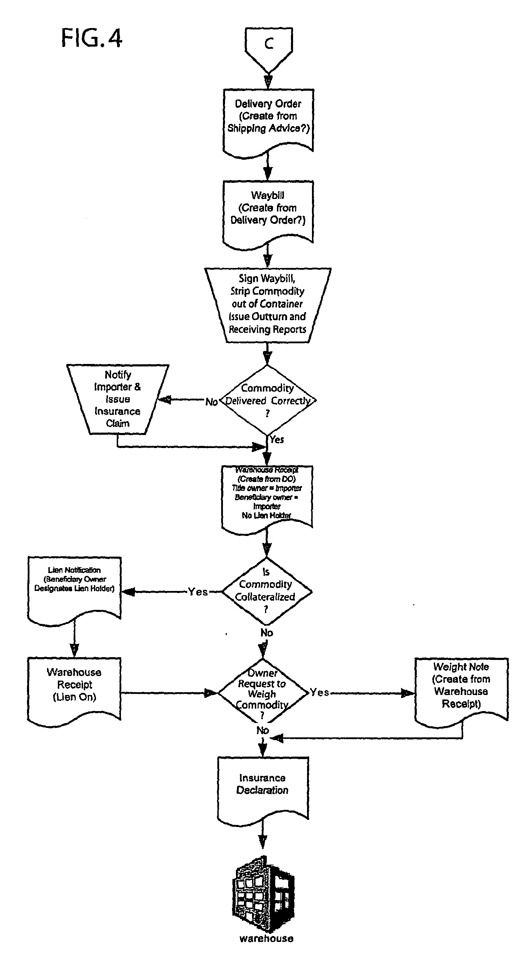

Figure 4 is a flow diagram illustrating steps for commodity transfer from pier to warehouse in accordance with the embodiment of Figure 1;

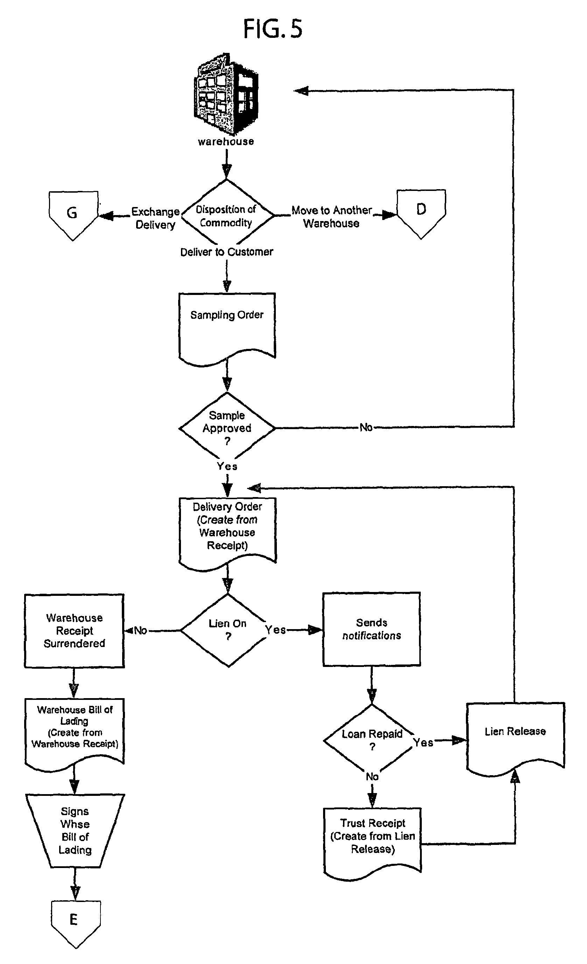

Figure 5 is a flow diagram illustrating steps (out of warehouse) for commodity transfer from warehouse to processor in accordance with the embodiment of Figure 1;

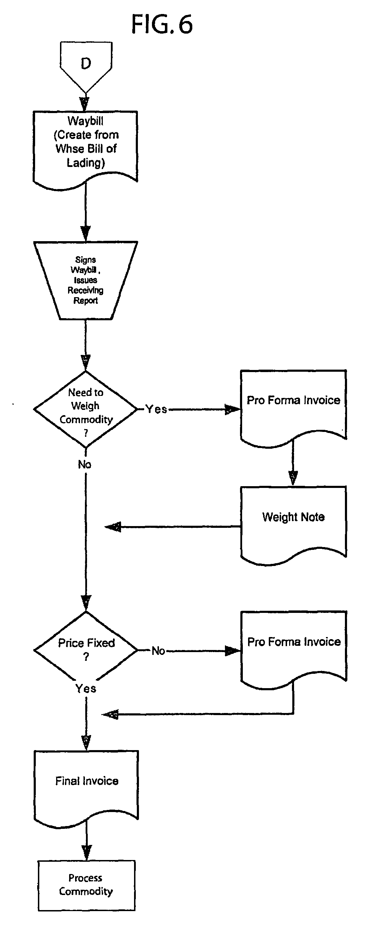

Figure 6 is a flow diagram illustrating steps (to processor's location) for commodity transfer from warehouse to processor in accordance with the embodiment of Figure 1;
Figure 7 is a flow diagram illustrating steps (out of warehouse) for commodity transfer from warehouse to warehouse in accordance with the embodiment of Figure 1;
Figure 8 is a flow diagram illustrating steps (in to a warehouse) for commodity transfer from warehouse to warehouse in accordance with the embodiment of Figure 1;
Figure 9 is a flow diagram illustrating steps for commodity exchange delivery (certification and issue notice) in accordance with the embodiment of Figure 1; and
Figure 10 is a flow diagram illustrating steps for commodity exchange delivery (title and money transfer) in accordance with the embodiment of Figure 1.
Figure 11 is a system overview in accordance with an illustrated embodiment thereof;
Figure 12 is a table which depicts users of the system constructed in accordance with the illustrated embodiment, the types of documents automatically updated thereby, as well as which users transact with which types of documents;
Figures 13a-13d is a flow diagram illustrating steps in accordance with the illustrated embodiment of Figure 11;
Figure 14A is an exemplary delivery order;
Figure 14B illustrates a browser interface useable with the illustrated embodiment;
Figure 15 is an exemplary GUI sampling order;
Figures 16-20 are exemplary GUI data entry forms for various data fields;

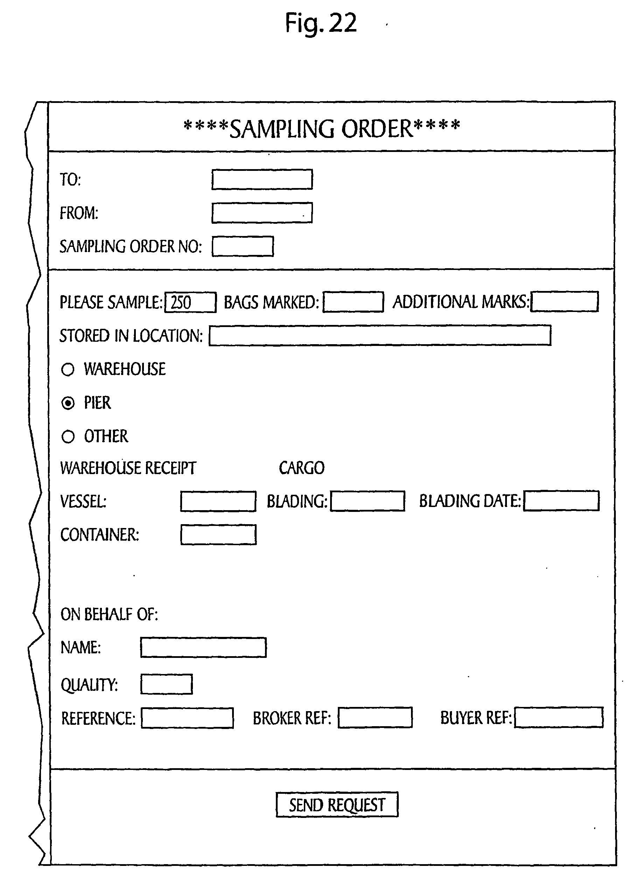

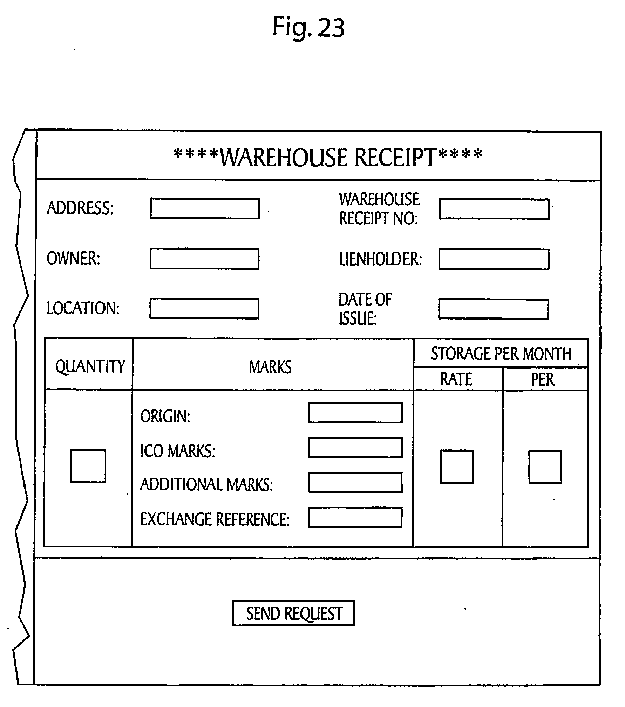

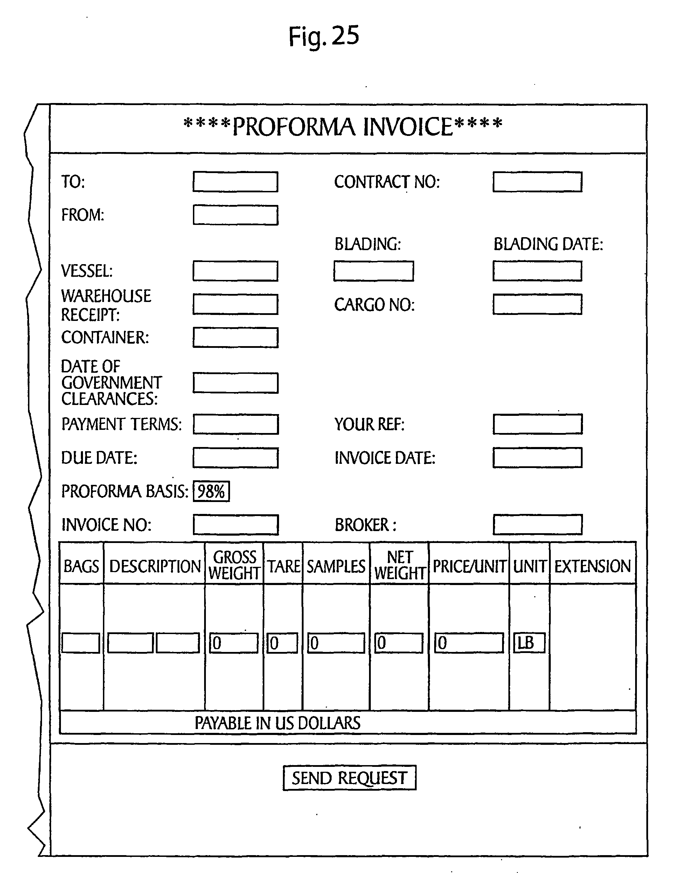

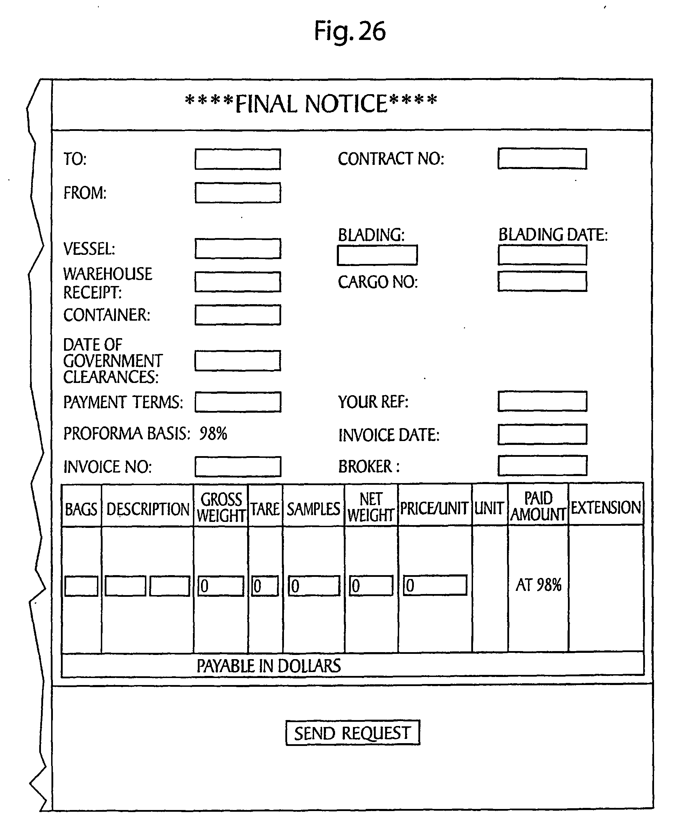

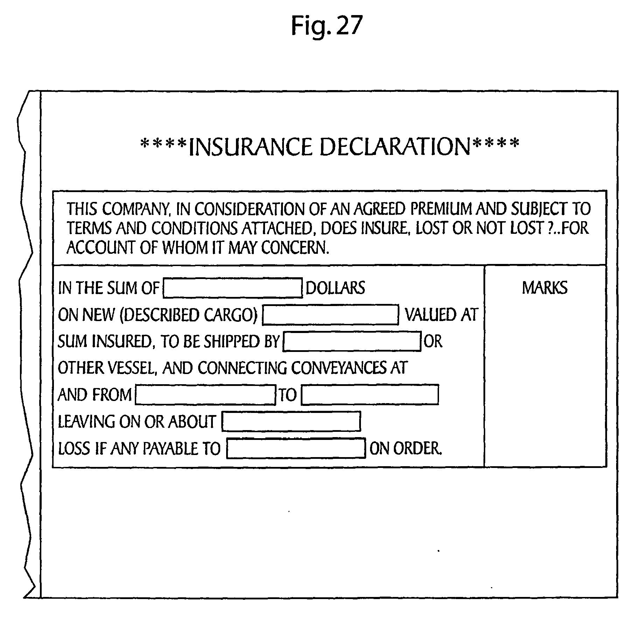

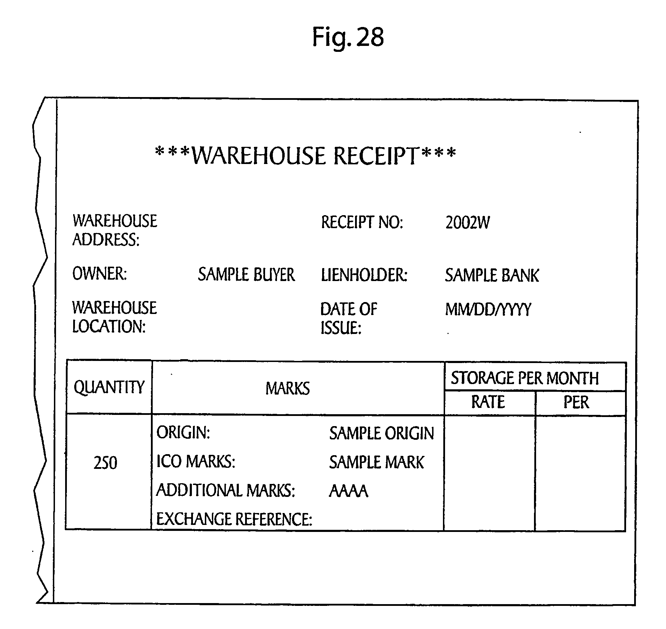

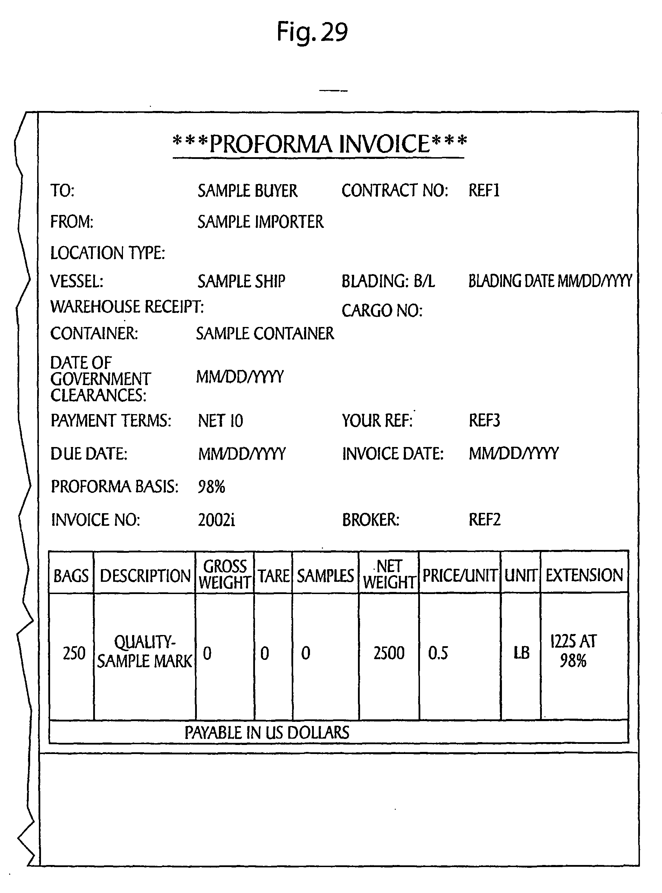

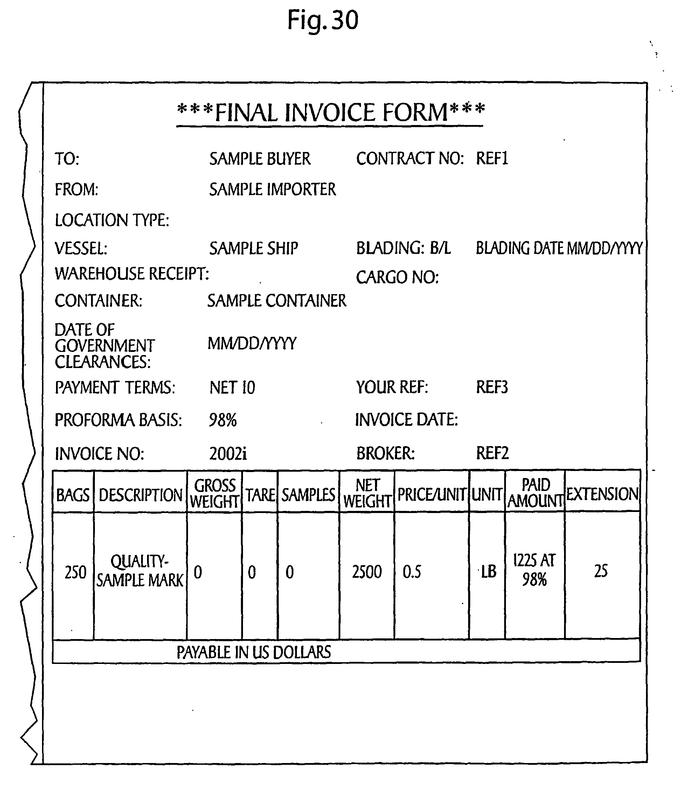

Figures 21-30 are further exemplary GUI data entry forms for various data fields;
Figures 31 (a) and 31 (b) depict an exemplary GUI Ocean Bill of Lading; and
Figure 32 depicts an exemplary GUI Shipper's Letter of Instruction.

### Description of an Illustrative Embodiment

By way of overview and introduction, the present invention relates to a system and method for securely documenting the title, and effectuating the transfer of title, of a commodity over a distributed computer network, while the commodity is in international transit. Data records are built for each particular unit of commodity. Once the data records are built, or concurrently with the record build, the data records are partitioned into a number of data fields relating to the commodity. Each data field preferably pertains to a particular document in the transfer of the particular commodity though the data record can be configured to have data fields specific to data entries within particular documents, as understood by those of skill in the art. For example, data fields can include, without limitation, a Shipper's Letter of Instruction, Ocean Bill of Ladings, and Notices of Assignment. Actors are granted access to the data fields which pertain to each particular actor's contribution in the transfer of the commodity from source to end user. That being said, information pertinent to a particular data field may also be pertinent to information contained in another data field pertinent to another actor. If so, such information is automatically distributed amongst the data fields of various documents thereby minimizing duplicate and possibly contradictory data entries.

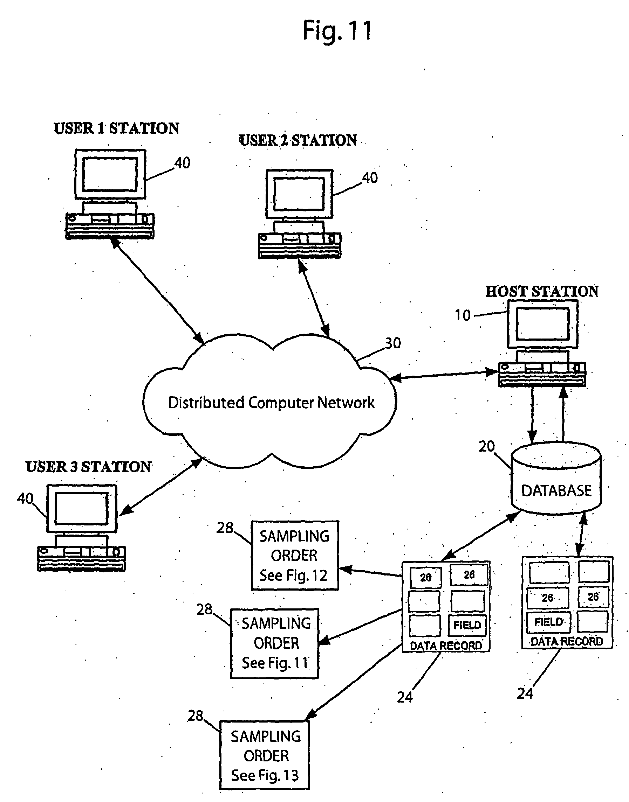

Figure 11 depicts an overview of the main hardware components associated with the commodity documentation system of the illustrated embodiment. A host computer 10 interfaces with database 20 and a distributed computer network system 30. The distributed computer network system 30 can be any type of inter-computer communication system that connects computers in a distributed manner such as the Internet, an intranet, LAN, or WAN. User terminals 40 are connected via the network 30 to the host computer 10. The user terminals 40 are thin clients on the distributed computer network 30 and, hence, rely on the host computer for most of the system functions. Host computer 10 communicates with the user terminals 40 to upload data from the terminals or to download data to the terminals. Database 20 stores data records 24 and which are parsed into plural data fields 26. Each unit of a particular commodity has a data record 24. As shown in Figure 11, the data record 24 has been parsed into six data fields 26. As further shown, the data fields represent various information about a particular commodity. Figure 11 schematically refers to various data entry forms 28 suitable for particular unit of a commodity. By way of example, the data entry forms for a Sampling Order, Delivery order and Weigh Note are depicted in Figure 11 and are all relevant to a coffee transaction, though the invention is not limited in application to any particular commodity. Database 20 also contains storage memory containing the data entry forms 28. Additionally, host computer 10 is controlled by a system control program 12 which operates to create the commodity document system of the present invention by storing, displaying, modifying, and securing the data pertaining to documents necessary in the series of transactions for commodities. Of particular relevance is that the document system includes the Shipper's Letter of Instruction, Ocean Bill of Ladings, and Notices of Assignment.

The following discussion will use coffee as a representative commodity. However, the invention is not so limited as be applicable only to coffee. The present invention also has application in the exchange of other commodities such as cocoa, cotton, wheat and sugar, etc.

As an example, most coffee is shipped from its source by an Ocean Carrier. Upon arrival, the coffee is turned over to an Overland Carrier to deliver the goods to the end user, or a commodity processor, which in this example is a Coffee Roaster. Oftentimes, for instance with exchange deliveries, the commodity will go to a warehouse for storage. At a later date, an overland carrier would be contracted to move the commodity to the end user.

When an owner wishes to collateralize the commodity, a Notice of Assignment is generated which pledges the owner's title in the commodity to the financial institution. This Notice of Assignment, when generated in electronic form, acts to record the title to the financial institution. The financial institution then forwards the loan proceeds, now secured by the commodity, to the seller. To transfer ownership to the seller, the commodity needs to be placed under the pledgor/owner's title so that a transfer of goods and payment can be made between buyer and seller. The pledgor/owner has an electronic Trust Receipt issued to guarantee payment of the loan back to the financial institution, and the bank responds by having an electronic Bank Release issued. The pledgor/owner now has free title to transfer ownership of the commodity to the seller.

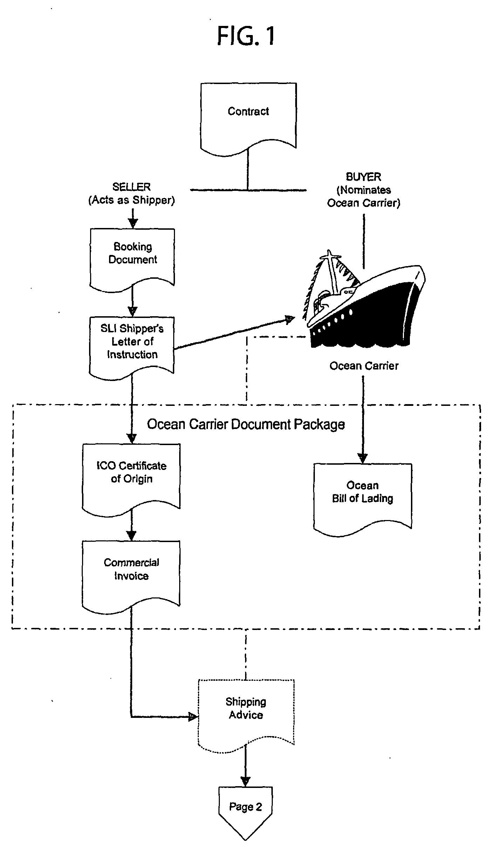

The Ocean Bill of Lading ("Ocean Blading") is a full title document. With reference to Figure 1, after a seller and buyer enter into the contract of sale for the coffee, the buyer nominates an ocean carrier. The ocean carrier is responsible for the coffee while it is in international transit, and its handoff to the proper owner at dockside once the ship arrives in port. The seller (now the shipper) issues a Shipper's Letter of Instruction to the buyer's nominated ocean carrier. The Shipper's Letter of Instruction informs the ocean carrier of the shipment and details regarding the shipment (e.g., quantity, weight, packaging, volume, delivery date, etc.). The ocean carrier examines the actual physical shipment to determine if there is a match with the terms of the Shipping Letter. If there is a match, the ocean carrier issues a Ocean Blading. The Ocean Blading is then given to the shipper, who exchanges the Ocean Blading for the buyer's payment as contemplated in the sales contract.

An important aspect of the international commodity marketplace is the ability to obtain financing using the commodity as collateral. Also, to take advantage of market price conditions, an owner may wish to transfer ownership. The same may be true of successive owners. In the prior art, the Ocean Blading is a bearer instrument, which grants to its bearer all rights in the commodity covered by the Ocean Blading. Therefore, prior to the present invention, when the owner of the commodity wished to transfer ownership, or collateralize a loan, while the commodity was in transit it was necessary to transfer physical possession of the Ocean Blading to the new title holder, or surrender it to the financial institution offering the loan. The time to effect a market transaction was lengthy and required couriers to move documentation across oceans, so that the Ocean Blading (a bearer instrument) could be delivered. Accordingly, several disadvantages are present in the prior art ― e.g., the number of market transactions is necessarily limited, the title owner's ability to react to volatile market conditions is hampered, and the integrity of the system is susceptible to fraudulent documentation.

The Ocean Blading generated by the present system is an electronically generated title document which transfers title. By transferring title with an electronic Ocean Blading, the ownership interest is immediately verifiable by the parties to the transaction. Thus, the electronic Ocean Blading provides a much more secure ownership interest over the paper Ocean Bill of Ladings as practiced by the prior art. Upon generation of an electronic Ocean Blading, title transfers to the designated receiver of the commodity, who is then able to leverage the value of the commodity with a financial institution as describe above. The system in accordance with an embodiment of the invention eliminates the need to courier paper bearer instruments across international boundaries and oceans. Additionally, a more fluid market is created where a commodity can be collateralized much sooner, thus generating a greater cash flow for the actors participating in the transactions.

In one embodiment of the invention, on instructions from the ocean carrier the system 10 generates an electronic Ocean Blading having an identifier. The electronic Ocean Blading identifies the shipper (i.e., the entity selling the coffee) as the title owner. The entity taking delivery of the commodity is the beneficial owner. During transit, if the commodity is used as collateral, a new electronic Ocean Blading is generated by system 10, and is assigned a sub-identifier linked in the database to the original identifier. This new electronic Ocean Blading identifies the consignee, here the bank while the loan is active. When the loan is satisfied during transit yet another electronic Ocean Blading is generated with another sub-identifier. All parties to the transactions have access to view the retrospective history of the commodity and its consignees, beneficial owners, and title owners from the point in time where they became involved and earlier. The ocean carrier has rights to see the entire transaction history. Thus, the electronic Ocean Blading provides an audit trial with traceability as to who owned the commodity, when they owned it, and when ownership was transferred during international transit.

The system 10 populates data fields of a database with information from a shipper's letter of instruction concerning the commodity and identifying the title holder and the beneficial party. The data fields are transformed to create an electronic ocean bill of lading that associates title with a title holder identified therein. Encumbrance information from the titleholder and a third party, received through the network, is analyzed by a computer for any discrepancy. The computer authorizes an encumbrance on the title free of any paper documentation verifying the encumbrance, and updates the electronic ocean bill of lading to reflect the encumbrance. The electronic ocean bill of lading created by the computer is the sole determinant of the title to commodity, permitting the title holder to receive remuneration from the third party for the encumbrance.

When the ocean vessel arrives at the destination dock the commodity is offloaded and turned over to a land carrier. The land carrier is pre-designated by the buyer of record on the electronic Ocean Blading. A delivery order, described below, is generated designating the land carrier and the goods as specified in the electronic Ocean Bill of Lading. The deliver order contains information on where the goods are to be delivered. Upon generation of the delivery order by system 10, the electronic Ocean Blading is supplanted by the delivery order and the electronic Ocean Blading expires. Upon expiration the electronic Ocean Blading no longer indicates title to the commodity. If the goods are delivered to a warehouse, an electronic warehouse receipt is generated by system 10, as described in more detail below.

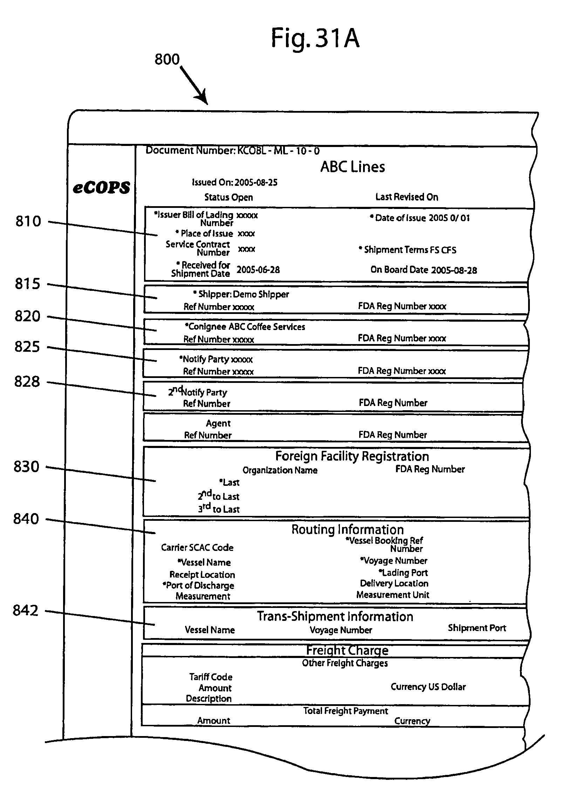

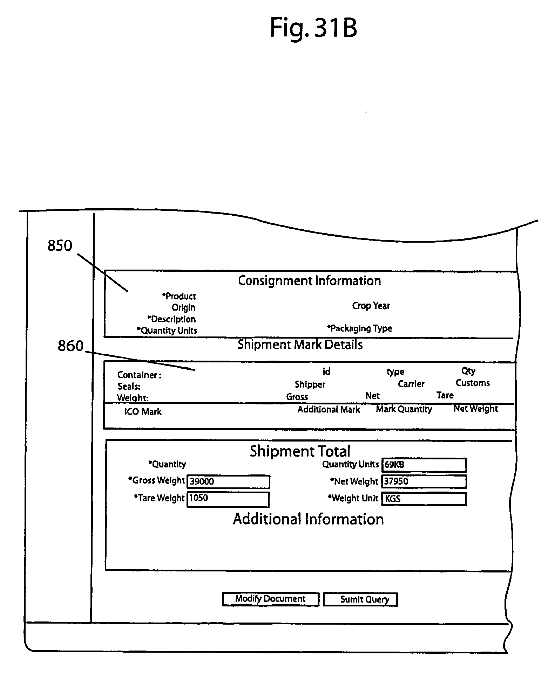

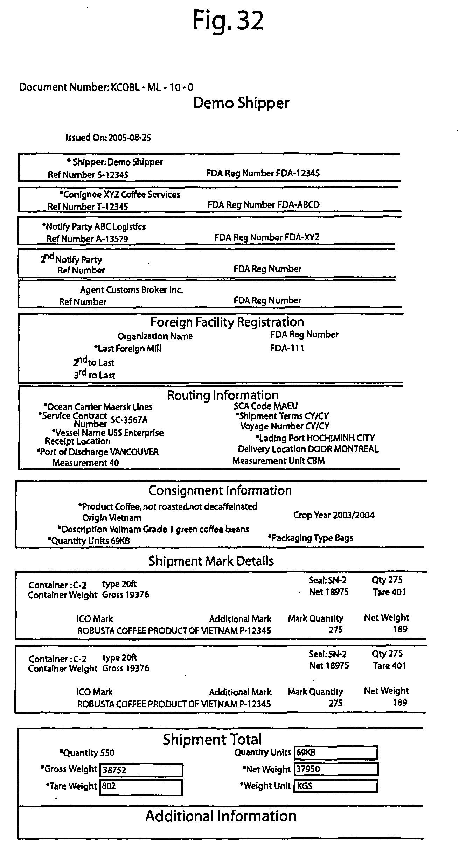

Figures 31 (a) and 31(b) depict an embodiment of a graphical manifestation of the electronic Ocean Blading document 800. The Issuer Block 810 indicates the Issuer's Bill of Lading Number, Date of Issue, On Board Date, and other information such as shipment terms, contract number, etc. The Shipper Identification, Food and Drug Agency registration, and reference number are indicated in block 815. Blocks 820 and 825 identify the consignee and notification party, respectively, along with there registration information. Importantly, the electronic Ocean Blading indicates second notification party information in block 828. Tertiary and subsequent notification party information can also be identified in additional blocks (not shown). Routing information is indicated in block 842 and includes the port of discharge, vessel name, voyage number and other information pertinent to identifying the commodity's travel. The consignment information block 850 includes information on the product type, place of origin, description, crop year, quantity, and type of packaging. Information as to marking details is indicated in block 860. Figure 32 depicts an embodiment of a graphical manifestation of the Shipper's Letter of Instruction. The Letter of Instruction contains a subset of the information placed into the electronic Ocean Blading 800 is actually the source of information for the corresponding blocks of the electronic Ocean Blading

Two different invoices document the value of a commodity depending on where in the series of transactions the value is being determined. First, the Shipper's Invoice is part of the original documentation package from the commodity's source country. Importers and financial institutions use this invoice to pay for goods while they are in transit on the ocean. The Shipper's Invoice also is used to calculate the Customs and port user fees that are charged by the government. The other invoice is a Simple Invoice, and it is used to set forth the cost of goods on sale after importation. There can be more than one Simple Invoice in the series of transactions, leading to possession of the commodity by the end user, each occurring upon the exchange of the commodity.

Contract, Price Fix Letter, Destination Declaration ("Dest. Decl"), and Shipping Advice ("Ship Adv.") are four other documents used by front office operations involved in the commodity operation. The host computer 20 of the commodity documentation system is able to download information about the commodity being managed that is used repetitively by the front offices of each actor in the series of transactions.

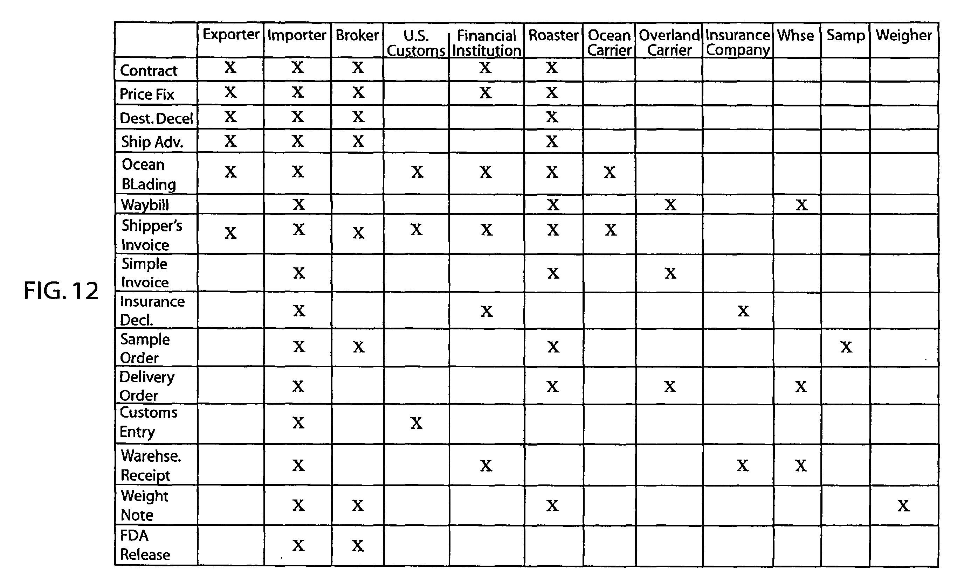

Also outlined in Figure 12 are twelve actors that are involved in a typical commodity transaction for coffee. The Exporters are at the beginning of the document flow for coffee. There are thousands of exporters in the fifty-two countries that generally are known to export coffee. An exporter is involved in contracts, (lawful) price fixing, destination declarations, shipping advices, ocean bill of ladings, and commercial (Simple) invoices. Utilizing the hosted system, exporters can store more inventory at the destination port and thereby increase their domestic (that is, U.S.) credit-worthiness for higher lines of credit at interest rates that are generally lower than are available in their source country. Such a benefit is a prime example of how the hosted system expands trading into secondary markets.

Importers require access to all the documentation listed in Figure 12. Access to these documents through the hosted electronic commodity documentation system 10 will lead to money saving reductions in back office costs. By easing the burden and cost associated with paper documentation, the hosted computer 10 can stimulate trading in a secondhand market. Thus, for example, other software systems in support of cash market transactions can be used to trade bags of coffee or another commodity with internet efficiency and speed, allowing for the exchange of a commodity three, or more times, between merchants, before finding a final buyer. The present system, however, is not configured to trade goods.

Financial Institutions actively finance the coffee business on a collateralized basis, as described above in connection with the alternative title transfer papers of Notice of Assignment, Trust Receipt and Bank Release. The system 10 improves upon the present commodity documentation management techniques and creates a more efficient and more secure documentation system. This greater efficiency and security can encourage the entrance of more banks and other financial institutions into the commodity marketplace who may find these increased security measures as sufficient for them to finance these commodities.

Insurance Companies and insurance underwriting companies are involved in insuring all shipments and warehouse deliveries. The hosted system automates the insurance declaration process as well, by permitting sharing of data concerning the particular unit of commodity in question among terminals connected to the network.

Ocean Carriers issue the Ocean Blading, described above. The hosted system provides a general standard GUI presentation for the electronic Ocean Blading, not shown. Similarly, Overland Carriers issue waybills and these waybills are preferably standardized by the hosted system to provide a more efficient way to book overland freight.

Customs Brokers ("Brokers") are the connection between the commodity industry and the U.S. and other Customs Services. Terminal 40 can interface with the U.S. Customs Service's ABI system and provide government approvals to include in the data records for specific units of a commodity (e.g., a given shipment). Warehouses ("Whse"), Samplers ("Smp"), Weighers, and Future Commission Merchants are also actors in the commodity market and need access to the documentation for a particular unit of the commodity.

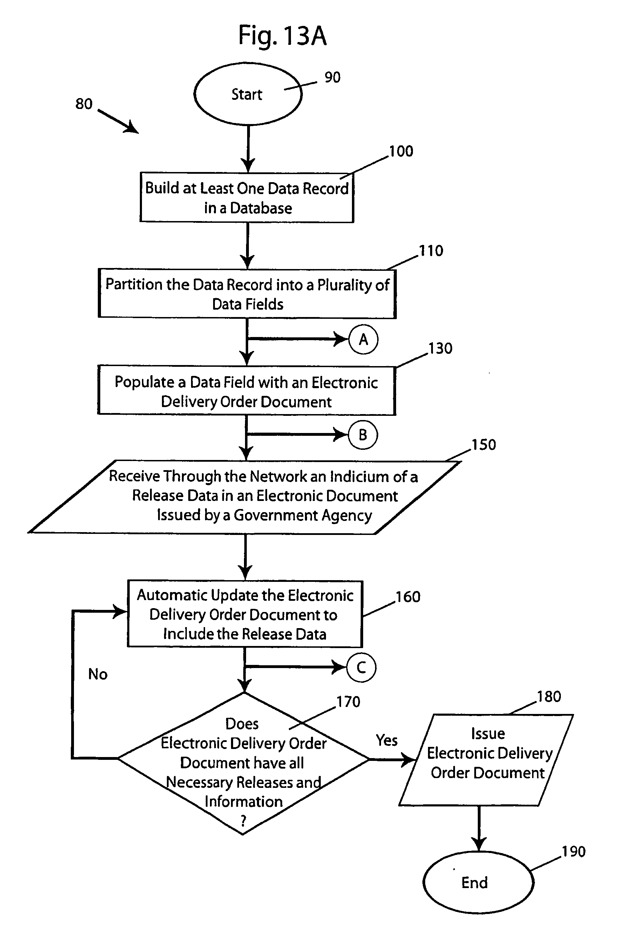

Figures 13a-13c illustrate processes which embody the methods in accordance with another embodiment. Process 80a broadly implements a method for controlling the movement of a commodity. Process 80b-80d enhance the steps of a process 80a with further, preferred steps in accordance with the invention.

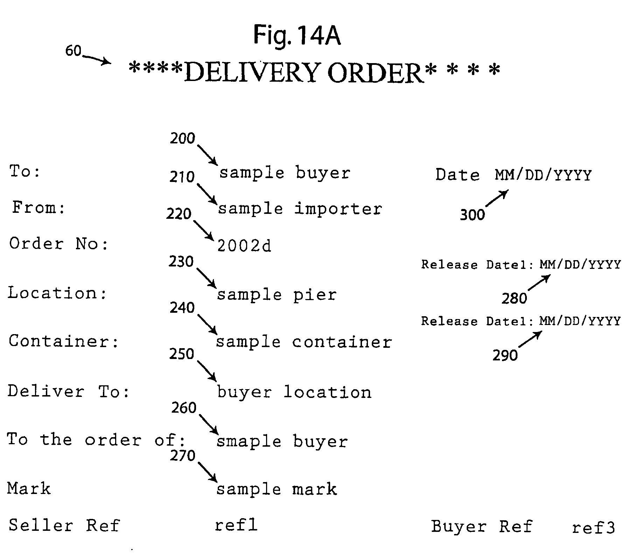

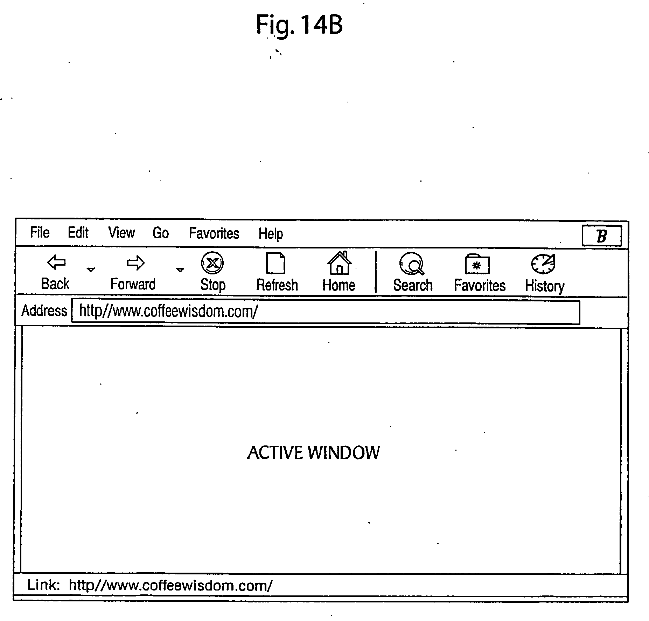

Figure 13a depicts a flowchart for a method which embodies one aspect of the present invention. At step 100 host station computer 10 builds at least one data record 24 which is then stored in the database 20. The data records in the database are then further partitioned by host computer 10 into a plurality of data fields 26 at step 110, or are partitioned upon creation. Within data record 24 can be stored the electronic documents for a series of transactions concerning the movement of a commodity from source to end user. The data fields 26, partitioned within the data record 24, can each represent an electronic document used in transactions between actors involved in the movement of the commodity or can represent fields within such a document. At step 130 the exemplary embodiment populates one data field 26 with an electronic Delivery Order document 60. An exemplary Delivery Order document is shown in Figure 14. Other forms of a Delivery Order can include a Notice of Assignment, a Trust Receipt, a Bank Release, and an Ocean Blading (all not shown).

Figure 14A depicts a graphical manifestation of the electronic Delivery Order document 60. A Delivery Order document as described herein transfers title between holders and can also refer to the final document needed in the series of transactions to allow for the movement of the commodity from its discharge point into the country of import; there can be other similar documents utilized after the goods have entered the destination country. The Delivery Order document indicates the buyer 200 and the importer 210. Additionally, pedigree information detailing the origin of the commodity is shown by displaying the pier 230, container 240, and identifying marks 270. Release date1 280 and release date2 290 are key parameters necessary for releasing the particular shipment of the commodity from its destination point. These dates are provided by the Customs and the Food and Drug Administration in the U.S. and by similar agencies overseas.

With continued reference to the method depicted in Figure 13a, at step 130 a data field 26 is populated with an electronic Delivery Order document. Further, at step 150, the distributed computer network 30 relays to host computer 10 an electronic document issued by a government agency containing an indicium of a release date. A government agency typical of being involved in the clearance of imported or exported commodities may be a Customs Service. Additionally, if the commodity is a food staple, such as coffee, sugar, or cocoa, an agency equivalent to the Food and Drug Administration may also be involved in providing approvals to proceed the movement of the commodity into a given country. For instance, within the United States the U.S. Customs Service implements an Automated Broker Interface system which connects authorized custom brokers to the U.S. Customs Service external network. The Customs Service issues customs entry documents which records pedigree information for the commodity which has previously been transmitted by the broker. Interaction between the customs broker, U.S. Customs Service, and the host system 10 detailed below.

The host computer station 10 automatically updates the electronic Delivery Order document to include the release date 280 at step 160. A particular shipment of a commodity, or a particular type of commodity, may require more than one governmental agency approval before being released from its destination point. Accordingly, at step 170 a method embodying one aspect of the present invention tests whether all the necessary releases and information has been populated into the electronic Delivery Order document. If all necessary releases have not been received the program loops back to step 160. If all necessary release dates and information has been populated into the Delivery Order, at step 180 the computer program operating within host computer station 10 automatically issues an electronic Delivery Order document. This is of particular advantage as it frees the current title holder to move the commodity into the country at the first possible moment.

For this embodiment, issuance of the electronic Delivery Order document demonstrates that the particular lot of commodity involved in this series of transactions has received all necessary clearances to physically move beyond the discharge point and towards the end user. The method of this embodiment terminates at step 190 after successful issuance of the electronic deliver order. However, the method preferably remains operative and available to control further movements of the commodity occurring between intermediary actors. These subsequent movements may be conditioned on other indicia, such as adherence to financing arrangements, contract terms, insurance obligations, etc., all of which can be programmed into the host 10 and tested based on the contents of the data records for that unit of commodity.

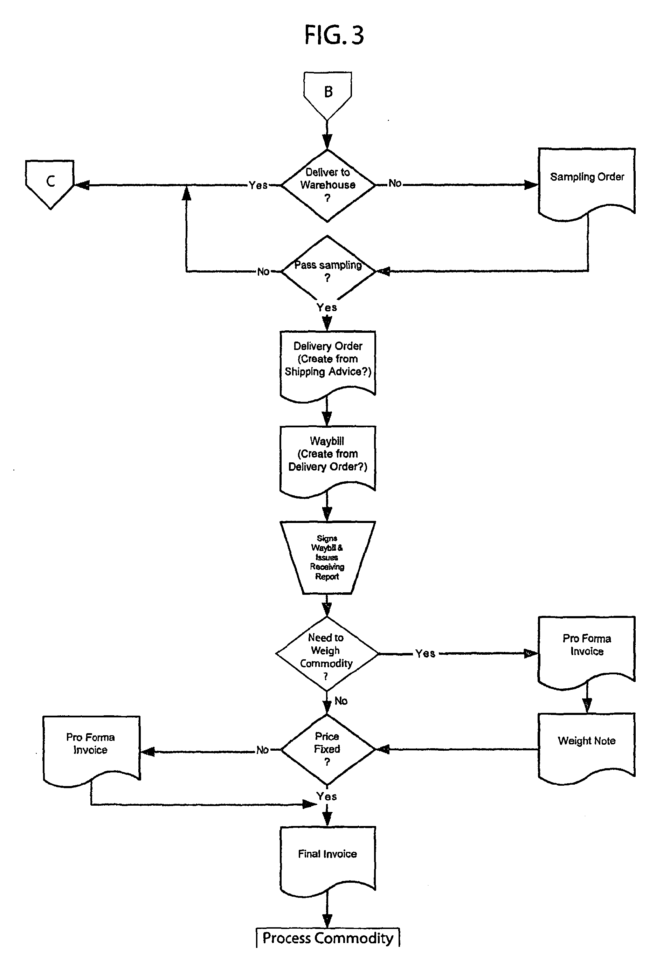

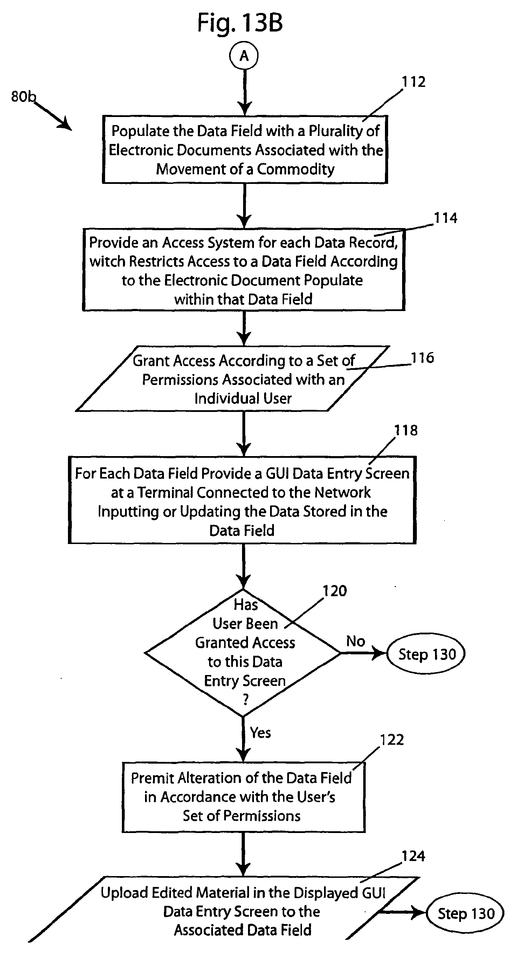

The method embodying the present invention can further include the steps illustrated in Figure 13b. After step 110 of the exemplary embodiment described above, a preferred method branches to point A of Fig. 3b. At step 112, data fields 26 are populated with a plurality of electronic documents. Each of these electronic documents are associated with a stage in the process that moves a particular lot of commodity from source to end user.

Information contained in an electronic document and populated within a data field can be pertinent information for another electronic document populate within another data field. Under the control of computer program 12, operating within the host computer station 10, the method of the present invention automatically propagates information previously entered in a data field 26 to another data field within the same data record 24. In this manner, as electronic documents are created for a yet unperformed transaction between actors, information pertinent to the new transaction already existing within the data record 24 is populated into the newly created electronic document.

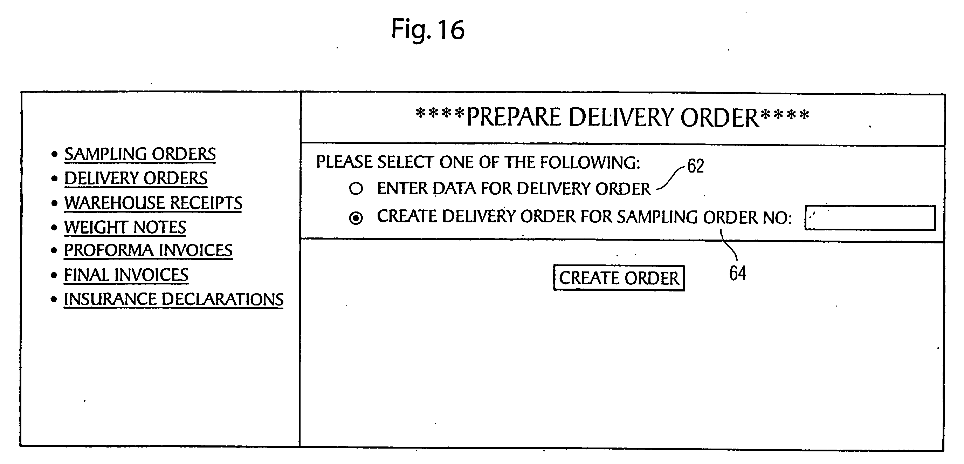

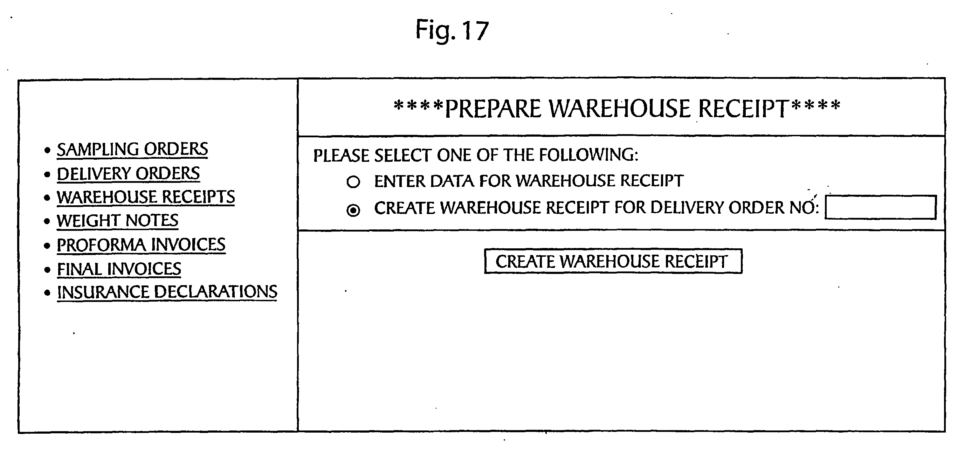

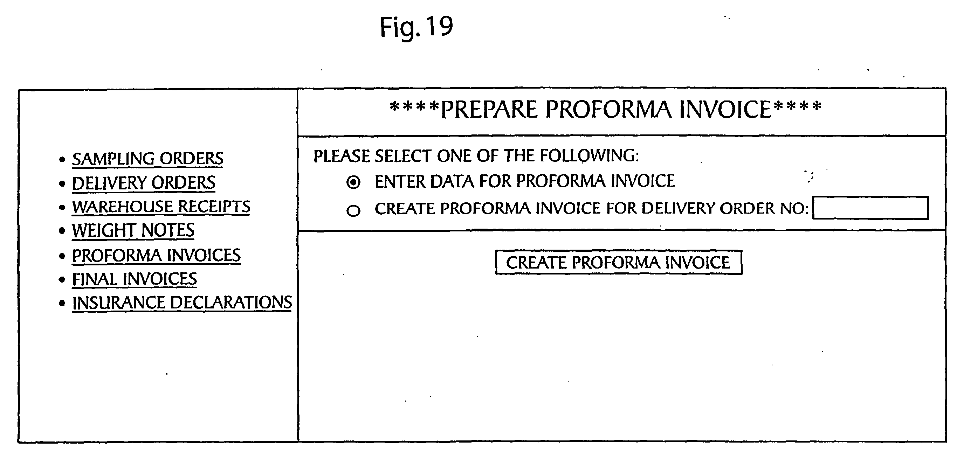

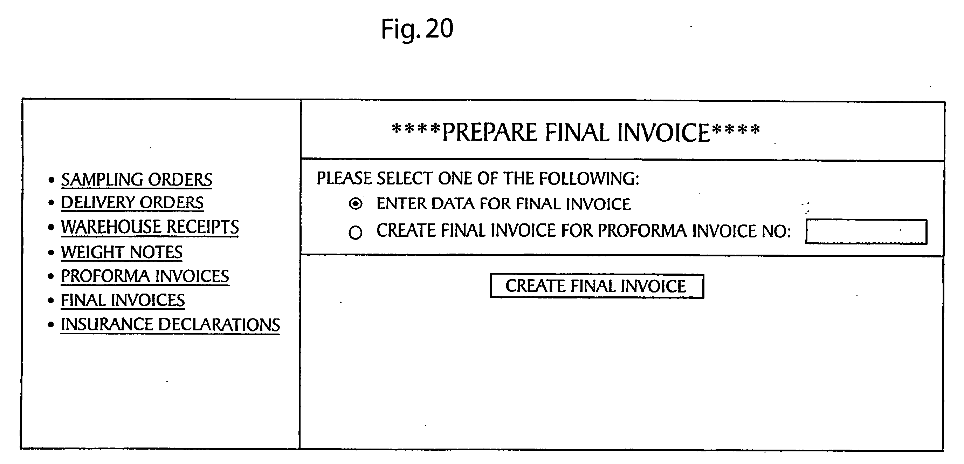

In order to assure security to the information being stored in these electronic documents the method of Figure 13b preferably provides an access system at step 114. This access system restricts an actor's access to a data field according to the particular electronic document populated within that data field and the actor's need to either access the information contained in the field, or modify that information. Therefore, at step 116, the computer program 12 grants access according to a set of permissions which are associated with an individual user's actions in the series of transactions. To assist an actor in updating information contained within a data field, a GUI data entry form 28 such as shown in Fig. 1 is made available by host station 10. Depending on the actor, the actor's set of permissions and the information which the actor inputs, prior to the GUI data entry form 28 shown in Fig. 1 being displayed, the computer program 12 will present a prepare data field GUI. Representative prepare data field GUIs are shown in Figures 16-20.

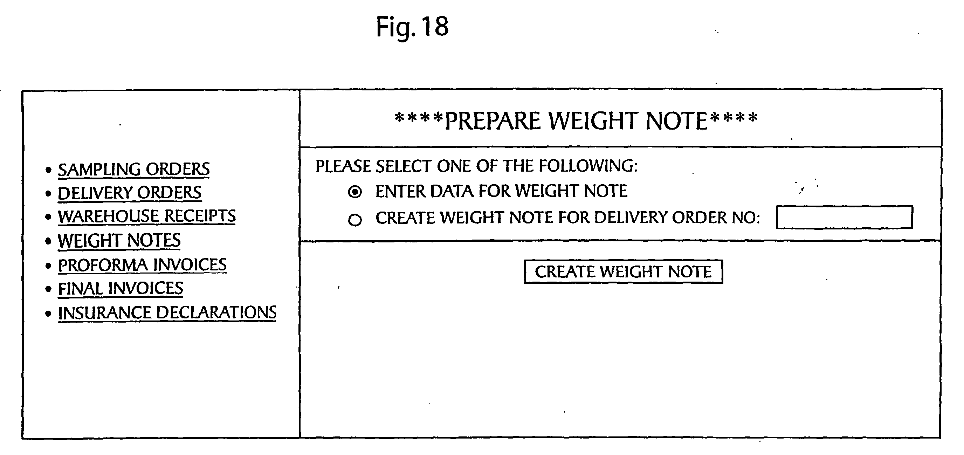

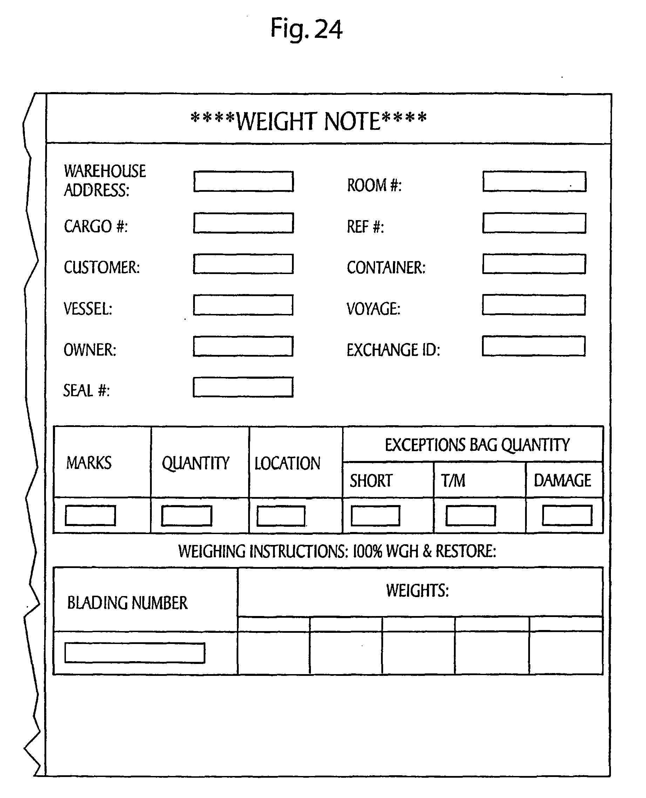

By way of example, according to Fig. 11, for a Weight Note the actors involved are the importer, broker, roaster and weigher. When the weigher inputs data regarding the weighing of a particular unit of a commodity, the program will display the Prepare Weight Note GUI shown in Figure 18. The weigher would make active the "enter data for weight note" condition in Figure 18. Subsequently, the program will display the Weight Note GUI shown in Figure 24. Naturally, if an exporter or another such actor not involved or responsible for the information contained in the Weight Note Attempted to edit the same, the set of permission associated with the such actor would prevent such data entry is displayed at step 118.

Figure 16 depicts the initial GUI screen 64 a user encounters when creating or editing an electronic Deliver Order document 60 that is usable by the host system. Window 64 presents to the user with check boxes 62, 66 which offer the selections of entering data or creating a delivery order. After a user makes a selection, the method of the present invention reviews the user's set of permissions to assure access has been granted.

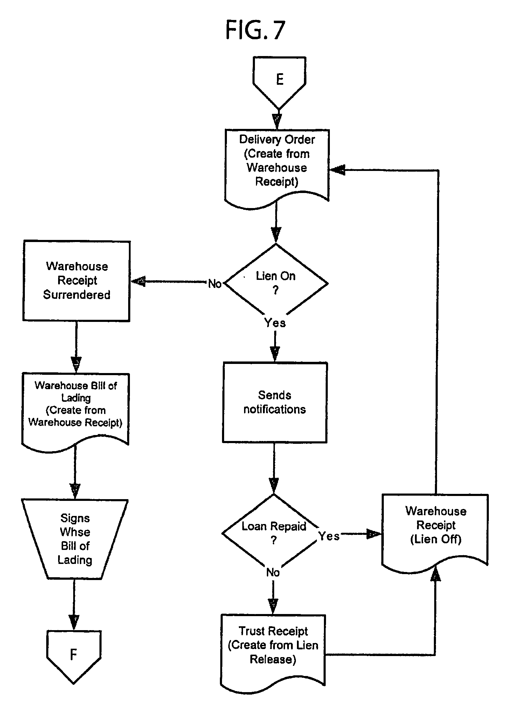

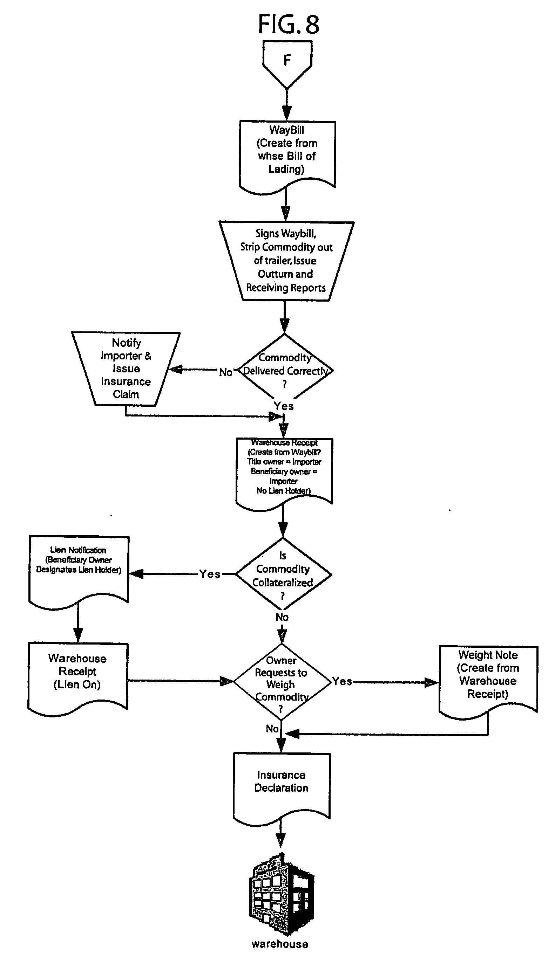

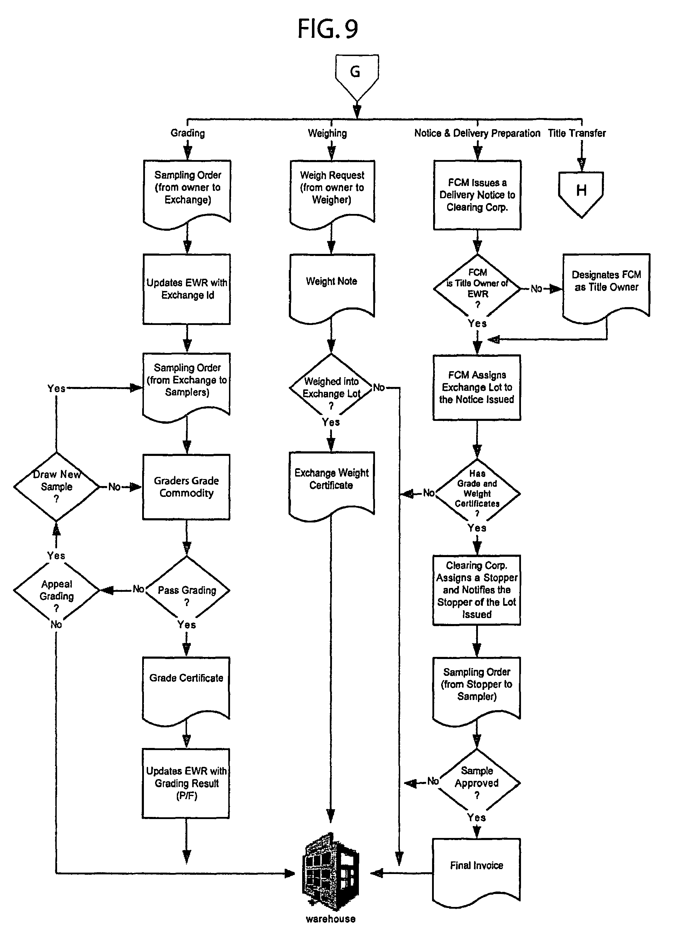

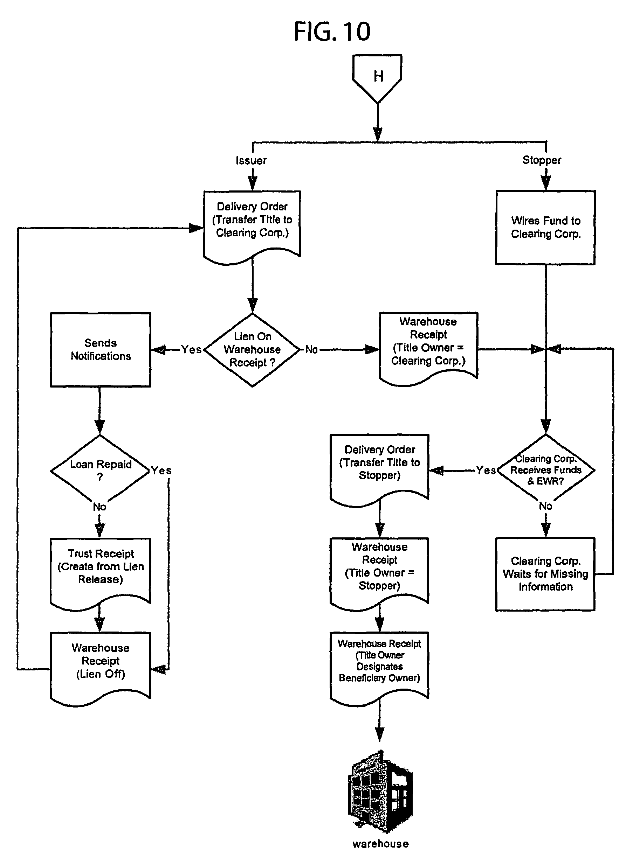

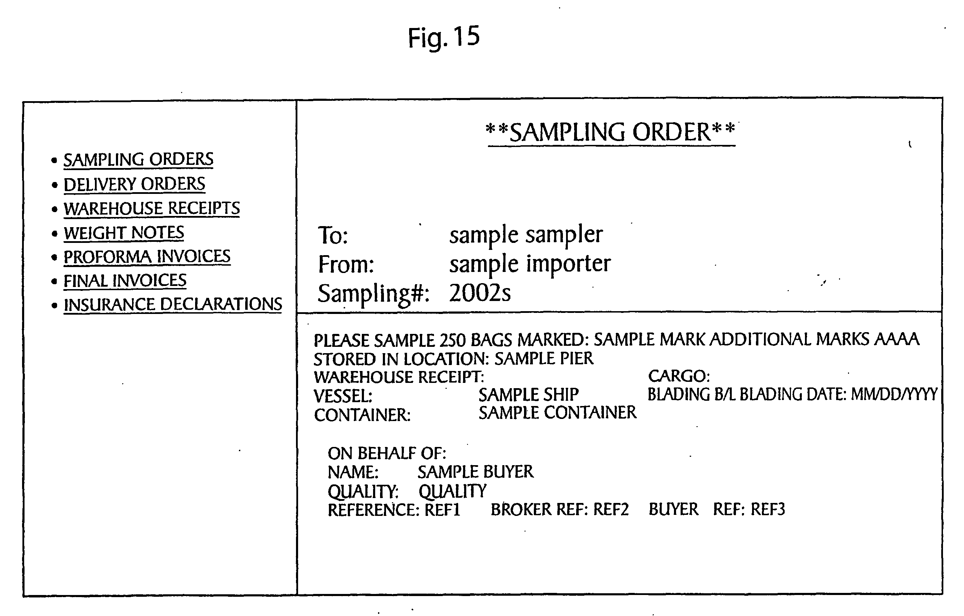

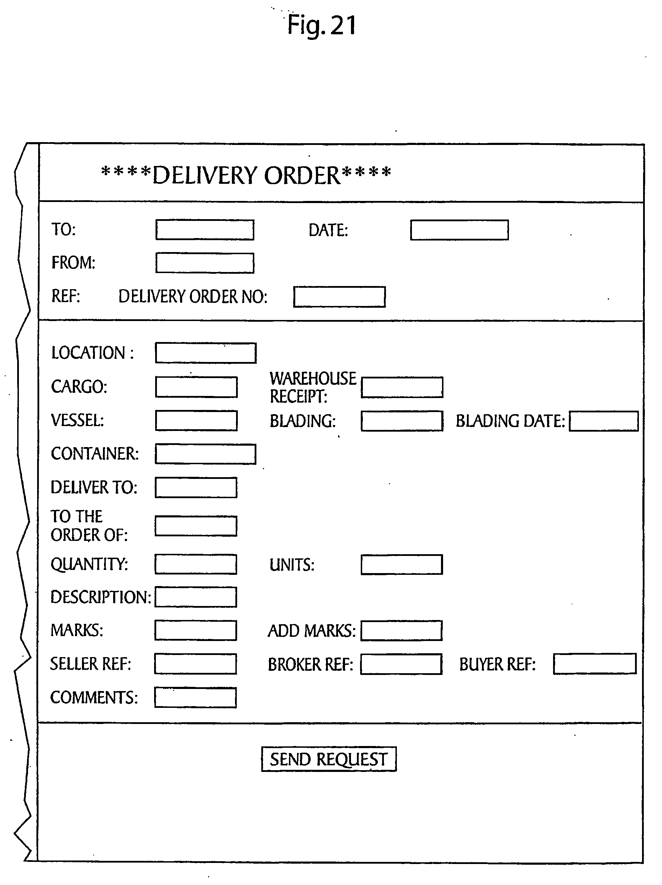

Figure 21 depicts the GUI data entry form for an electronic Delivery Order document 60 presented in another window. Data entry forms allow a user to input the data. Figures 7-10 and Figures 12-20 depict initial GUI windows and GUI data entry forms for other electronic documents.

Again referring to the method of Figure 13b, verification of the user's access to the data entry screen is performed at step 120. If the user has not been granted access to the particular data field, the method returns to step 130 of Figure 13a. If the user has been granted access, the program continues to step 122 at which step the actor is permitted to alter the data in the data field in accordance with the set of permissions granted to that user. At step 124, the computer system uploads the edited material in the GUI data entry screen and modifies the data stored within the particular data field associated with that electronic document. At step 126, the method returns to step 130. Steps 118-126 can occur throughout the duration of the series of transactions for a particular commodity. As long as the set of permissions for a user grants access, the GUI data entry screens will be made available. In other words, steps 118-126 occur before step 130, or at any other point where an electronic document is created or edited by a user.

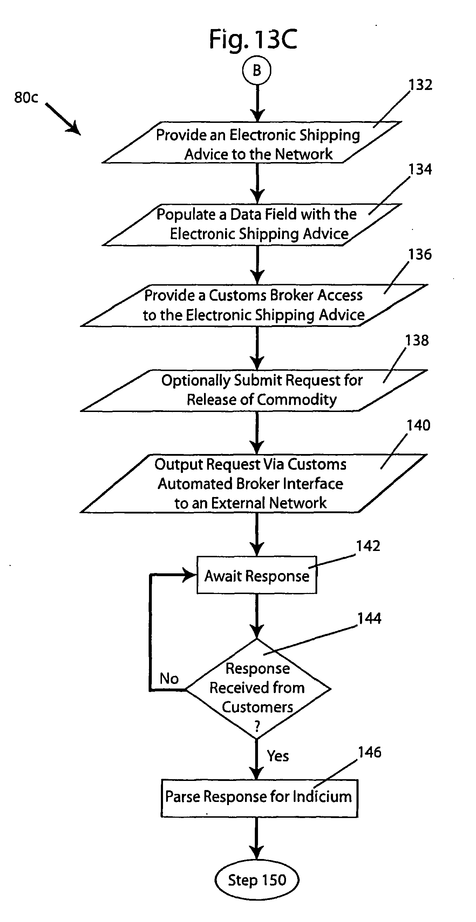

Figure 13c shows a further preferred enhancement to a method in accordance with the present invention. At branch point B of Figure 13a the method continues to step 132 where an electronic Shipping Advice document is provided to the network by an importer. The electronic Shipping Advice document contains information on the origins and transportation of the commodity from its source. This information includes the country of origin, the point of origin such as the seaport, the name of the vessel transporting the commodity the vessel's voyage number its port of loading, the estimated date of arrival and the place to where the commodity will be delivered. Also contained within this shipping advice document are the container numbers, the seal numbers and the number of bags per container.

Confirmation of the information contained within a Shipping Advice has become even more critical in the modem political environment. Externalities such as biochemical terrorism necessitate that more information regarding the pedigree of the food supply to the nation be available to better protect the general welfare of the population. At step 136, a Customs Broker accesses the electronic Shipping Advice and submits, at step 138, a request to the government agency responsible for approving the release of the particular lot of the commodity. For example, the government agency can be the aforementioned U.S. Customs Service or Food and Drug Administration Agency or foreign agency with equivalent jurisdiction

An approved Customs Broker has access to the Customs Service Automated Broker Interface and can provide the necessary information via an external network to the Customs Service at step 140. At step 142, the computer system awaits response from the Automated Broker Interface. At step 144, the computer system tests for whether a response has been received from the Customs Service. If no response is received the system loops back to step 142. Upon receiving a response the system continues to step 146 where it parses the response for an indicium of the release date. After step 146 the method of the present invention returns to step 150 of Figure 13A.

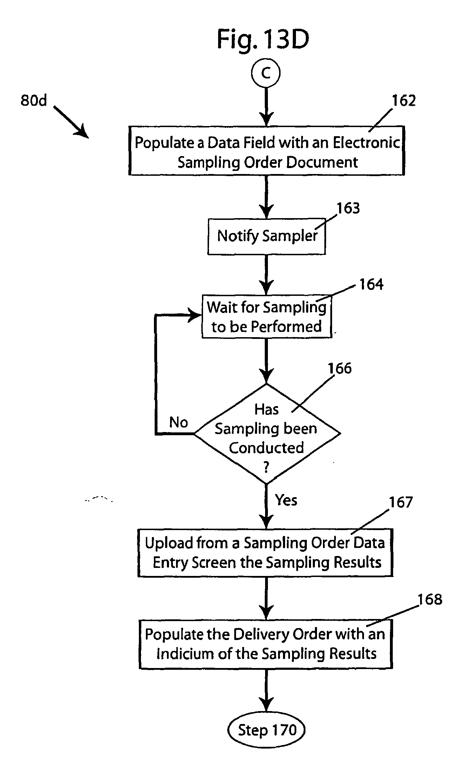

The further steps outlined in Figure 13d further enhance the method in accordance with the present invention. After step 160 of Fig. 13a, the method embodying this invention proceeds along branch point C to step 162 of Figure 13d. At step 162, a data field 26 is populated with an electronic Sampling Order document. The Sampling Order starts the sampling process which is a quality control process verifying that the goods or commodity is what was shipped and ordered. Further, the sampling order also initiates the tendering process. The data entry screen for Sampling Orders identifies the number of bags, their markings, any additional markings and where the bag is currently being stored.

The computer system 10, under control of the program 12, notifies the sampler of the sampling order at step 163. The system 10 then awaits for the sampling to be performed at step 164 and at step 166 it tests for whether the sampling has been conducted, if not it loops back and waits at step 164. If a sampling flag has been set the system continues to step 167 where the sampling results are uploaded into the data field. At step 168 the system automatically populates into the electronic delivery order document an indicium of the sampling result. The method continues to step 170 of Figure 13A.

The steps outlined in the process flow diagrams of Figures 13a through 13d are all preferably performed by the program 12 executing on the host computer 10.

Thus, while there have been shown, described, and pointed out fundamental novel features of the invention as applied to several embodiments, it will be understood that various omissions, substitutions, and changes in the form and details of the devices illustrated, and in their operation, may be made by those skilled in the art without departing from the spirit and scope of the invention. Substitutions of elements from one described embodiment to another are also fully intended and contemplated. It is also to be understood that the drawings are not necessarily drawn to scale, but that they are merely conceptual in nature. The invention is defined solely with regard to the claims appended hereto, and equivalents of the recitations therein.

## Claims

1. A computer-implemented method for generating electronic title for commodities during international transit, the method implemented on computers connected in a distributed manner by a network, with at least one computer on the network including a database accessible to other computers on the network, comprising the programmatically executed steps under control of at least one computer on the network of:
building at least one data record in the database which tracks a series of transactions for a particular unit of a commodity;
partitioning the data record into a plurality of data fields;
populating one or more data fields of the database with information from a shipper's letter of instruction document concerning movement of the particular unit of the commodity, including information identifying the title holder and the beneficial party;
transforming the populated data fields to create an electronic ocean bill of lading, wherein the electronic ocean bill of lading associates title with a title holder identified therein;
receiving, through the computer network, encumbrance information from the title holder and a third party;
analyzing the encumbrance information for any discrepancy using a computer connected to the computer network; and
authorizing, through the computer network, an encumbrance on the title free of any paper documentation verifying the encumbrance; updating the electronic ocean bill of lading to reflect the encumbrance;
wherein the electronic ocean bill of lading created by the computer is the sole determinant of the title to the particular unit of commodity, permitting the title holder to receive remuneration from the third party for the encumbrance.

2. The method of claim 1, further comprising the steps of:
indicating in a data field of the database that financing of the commodity has occurred;
wherein the indicating step cause the identity of the title holder to be updated to identify the financial institution providing the financing of the commodity.

3. The method of claim 1, further comprising the steps of:
populating a data field with an indication that a Notice of Assignment has issued for the particular unit of the commodity;
changing the data field identifying the title holder to the consignee of the Notice of Assignment; and
automatically updating the electronic title to indicate the identity of the consignee when the electronic title is presented on a display in a GUI form.

4. The method of claim 1, further comprising the steps of:
providing an access system to each data record which limits access according to the data stored in each data field;
granting access to multiple users according to a set of permissions associated with each individual user; and
permitting alteration of data in the data fields of the data record in accordance with the set of permissions granted to the individual user.
providing an access system to each data record which limits access according to the data stored in each data field;
granting access to multiple users according to a set of permissions associated with each individual user; and
permitting alteration of data in the data fields of the data record in accordance with the set of permissions granted to the individual user.

5. The method of claim 1, further comprising the steps of:
associating a data entry form with each populated data field, wherein the data entry form includes a GUI input template for one or more associated data fields;
displaying at a terminal connected to the network having GUI capabilities the data entry form;
verifying the set of permissions associated with the individual user; and
uploading any edited material in the displayed data entry form to the associated data fields if the set of permissions associated with the user grants the user permission to edit such material in the display data entry form.

6. The method of claim 1, wherein the network is at least one of a web-based internet system, WAN, LAN, and an intranet based system.

7. The method of claim 1, wherein the programmatically executed steps provide a subscription service to members of a trade; and wherein said at least one computer is operated by a party which is neutral among the members.

8. A system for generating electronic title for commodities during international transit operative on computers connected in a distributed manner by a network which comprises:
a database configured to store a set of data records which track a series of transactions for a particular unit of a commodity; and
a host station having a program configured to:
parse the data records into a set of data fields; and
automatically populate the data fields with information which concerns an indication of a Shipper's Letter of Instruction, including information identifying the title holder and the beneficial party;
transform the populated data fields to create an electronic ocean bill of lading, wherein the electronic ocean bill of lading associates title with a title holder identified therein;
receive, through the computer network, encumbrance information from the title holder and a third party;
analyze the encumbrance information for any discrepancy using a computer connected to the computer network; and
authorize, through the computer network, an encumbrance on the title free of any paper documentation verifying the encumbrance; updating the electronic ocean bill of lading to reflect the encumbrance.
